# EUROPEAN PATENT APPLICATION

(11) **EP 1 600 861 A2**
(43) Date of publication of application: **30.11.2005**
(21) Application number: 05103842.0
(22) Date of filing: 10.05.2005
(51) Int. Cl.: G06F 17/30

(54) **Query to task mapping**

(30) Priority: 24.05.2004 US 852734
(71) Applicant: MICROSOFT CORPORATION, Redmond, Washington 98052-6399 (US)
(72) Inventor: Bala, Aravind, Redmond, WA 98052 (US); Hon, Hsiao-Wuen, Redmond, WA 98052 (US); Chandrasekar, Raman, Redmond, WA 98052 (US)
(74) Representative: Zimmer, Franz-Josef

(57) **Abstract**

Candidate mappings are generated between two sets of short strings. A set of files related to the two sets of strings is chosen. Each string from the two sets of strings is searched for in the set of files. Any two strings that match the same file are presumed to be related, and are mapped together. These candidate mappings may then be checked by annotators/reviewers.

## Description

### FIELD OF THE INVENTION

This invention relates in general to the field of string association. More particularly, this invention relates to finding associations between short text strings.

### BACKGROUND OF THE INVENTION

There are a number of applications where short text strings need to be conceptually linked to (or mapped to) other short text strings. For example, in classifier training, there is a need to associate queries from a query log to tasks or intent descriptions. In search situations, it may be desirable to associate additional metadata with search terms. If the strings to be matched are sufficiently long, word overlaps between the strings could be used to determine if they are related. However, if the strings are short, it can be very difficult to recognize possible relationships or associations needed to create a mapping between the strings. This is a result of insufficient information contained in the strings themselves, through which associations can be recognized and mappings can be created.

Previously, human annotators, skilled in the relevant technical field, have been used to create the mappings between the strings. This can be a slow and labor intensive process. In classifier training, for example, human annotators, for each given task, manually select queries that they find related to the task. Given that there may exist hundreds oftasks and thousands of queries, it is difficult for annotators to keep all the tasks and queries in mind and to do a consistent job of annotation. In addition, because of human cognitive limitations, the process can be error-prone and inconsistent. In order to reduce error, multiple annotators can work on the same query to task mapping. However, given the complexity of the field and the level of knowledge required by the annotators, the use of multiple human annotators can be very expensive.

In view of the foregoing, there is a need for systems and methods that overcome the limitations and drawbacks of the prior art.

### SUMMARY OF THE INVENTION

A semi-automated system is used to generate candidate mappings between two sets of short strings, which can then be reviewed by annotators. A sufficiently large set of files, preferably related to the two sets of strings, is chosen. Each string from the two sets of strings is searched for in the large set of files. Each file that matches a string is presumed to be related to that string, and can provide additional information and context about the string that is used to generate the candidate mappings between the two sets of strings. Specifically, any two strings that match a certain number of files are presumed to be related, and are mapped together. These candidate mappings can then be checked by annotators.

Rather than having the annotators generate the candidate mappings, as shown in the prior art, the annotators may act as reviewers in conjunction with the candidate mappings of the present invention. They do not have to keep in mind all the strings from each set, they can just verify if the candidate mappings appear meaningful (i.e., are appropriate) or not. This is a less-error prone and a much faster process. Since the candidate mappings are generated automatically, they are far more consistent. Thus, annotating data in accordance with the present invention will be much cheaper and result in higher overall mapping quality. In addition, this method will work with strings in any language.

Additional features and advantages of the invention will be made apparent from the following detailed description of illustrative embodiments that proceeds with reference to the accompanying drawings.

### BRIEF DESCRIPTION OF THE DRAWINGS

Figure 1 illustrates an exemplary mapping of queries to a set of files, in accordance with the present invention;

Figure 2 illustrates an exemplary mapping of tasks to a set of files, in accordance with the present invention;

Figure 3 illustrates an exemplary overlap between a mapping of queries to a set of files and a mapping of tasks to a set of files, in accordance with the present invention;

Figure 4 is a flow chart illustrating an exemplary method of query to task mapping in accordance with the present invention;

Figure 5 is an illustration useful in describing an exemplary method for assigning weights to a generated mapping in accordance with the present invention;

Figure 6 is a block diagram illustrating components of an exemplary system in accordance with the present invention; and

Figure 7 is a block diagram showing an exemplary computing environment in which aspects of the invention may be implemented.

### DETAILED DESCRIPTION OF ILLUSTRATIVE EMBODIMENTS

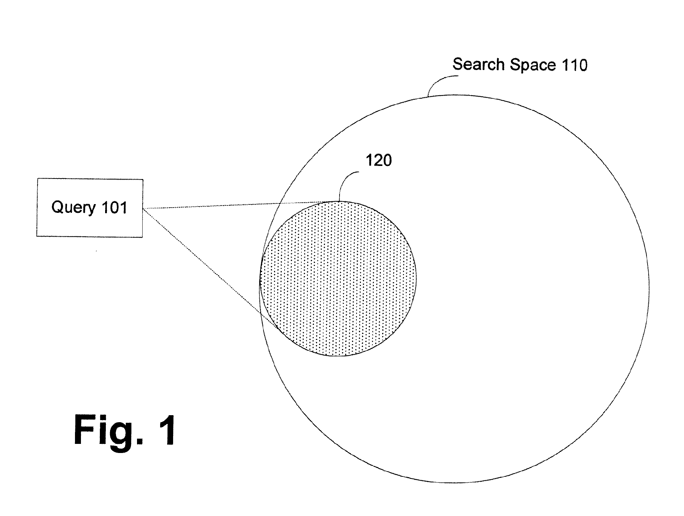

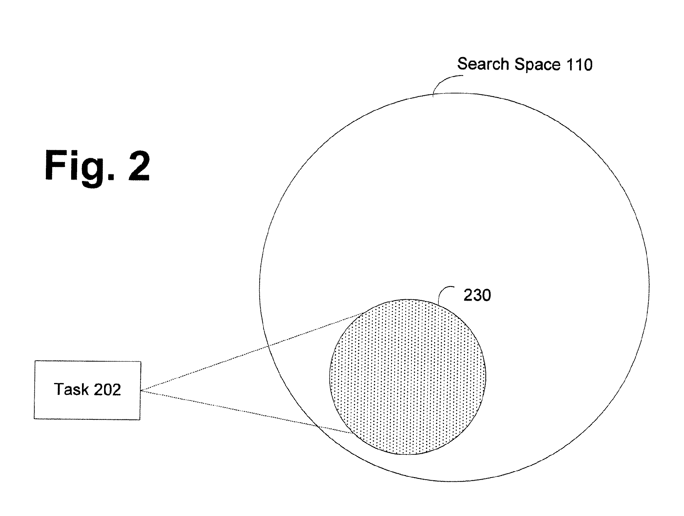

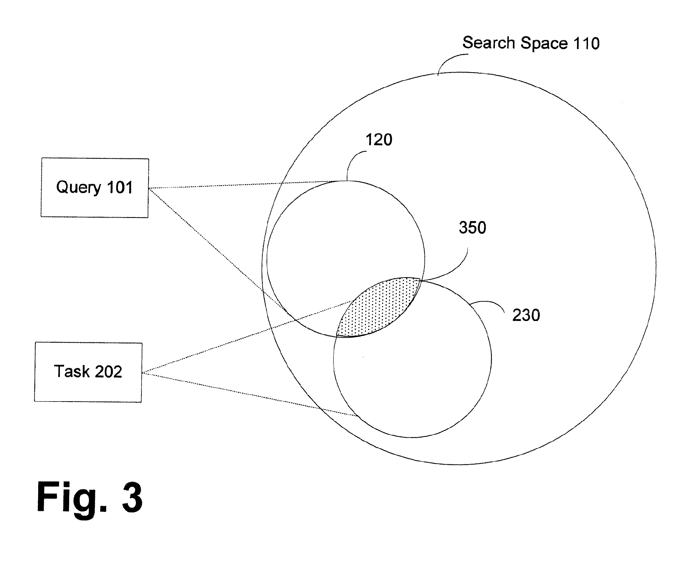

Figure 1 illustrates an exemplary mapping of queries to a set of files, Figure 2 illustrates an exemplary mapping of tasks to a set of files, and Figure 3 illustrates an exemplary overlap between a mapping of queries to a set of files and a mapping of tasks to a set of files. These figures are used to illustrate an exemplary method for determining if a relationship exists between a short string query, shown in Figure 1 as query 101, and a short string task, shown in Figure 2 as task 202.

Task 202 and query 101 are mapped to a set of text files, shown in Figures 1-3 as search space 110. The files matching task 202 are shown in Figures 2 and 3 at 230. The files matching query 101 are shown in Figures 1 and 3 at 120. The overlap between the files matching query 101 and task 202 are shown in Figure 3 at 350. The larger the overlap, the more 'related' the task and query. While the embodiment is described with reference to tasks and query strings, the invention is applicable to generating mappings between any sets of short strings.

More particularly, Figure 1 illustrates an exemplary mapping of the short string query 101 to a richer set of text files in search space 110. Because query 101 is a short string, for example a single word, there is very little content to work with in establishing a possible relationship between the query 101 and a task 202, shown in Figure 2. In order to find possible relationships between query 101 and task 202, it is desirable to first map the query 101 and task 202 to a richer dimension (e.g., search space 110). Mapping to a richer dimension provides more information by which to compare task 202 and query 101 and determine if a relationship exists between them.

As shown at 120, query 101 is mapped to several files (represented as space 120) in search space 110. To determine the mapping, each file in search space 110 is desirably text searched for query 101. In order to text search a file, the file is desirably scanned or searched for occurrences of the word or term that query 101 represents. The text searching can be done using any system, method, or technique known in the art for searching files for text strings. Any file that results in a match is presumably related to query 101, and can provide further information regarding the meaning of query 101. A match can be an exact match; for example, the word or term appears exactly in the text of the file. The match can also be a partial match, where only part of the word or term is found in the file. In addition, more sophisticated searching methods can be used to find matches, such as considering common misspellings or morphological variants (e.g. 'run', 'ran', 'running' as alternates for 'runs') for the searched terms. Any system, technique, or method known in the art for matching text strings can be used.

This information can then be used to generate a candidate mapping. The set of matching files is shown on Figure 1 at 120. For example, assume search space 110 contains two files: file 1 contains the words "foo", "bar", and "banana"; and file 2 contained the words "apple", "pear", and "banana". Also assume that the search term is "foo". In this example, after text searching file 1 and file 2 for "foo", "foo" matches file 1, but not file 2. Thus, the term "foo" maps to file 1, but not file 2. Similarly, if the search term was "banana", "banana" would match file 1 and file 2. Thus, the term "banana" would map to file 1 and file 2.

Whether or not a particular matched file is related to query 101 depends on both the size of the search space 110 and the relatedness of the search space 110 to the query. For example, if a large search space is chosen, for example, the internet, it is conceivable that no match could be found between any two text strings. If a search space is chosen that is too small, too many matches may be found. Therefore, it is critical that the search space 110 be chosen carefully.

One method for ensuring that a given match is meaningful and to reduce coincidental matches is to only consider matches that achieve a ranking above a certain user determined ranking. The ranking can be generated using any system, method or technique known in the art for ranking returned matches for a particular search term. For example, the user determined ranking is desirably some number dependent on, related to or otherwise representing the number of times a searched term must appear in a file before that term will be considered to match that file. This number can be determined through experimentation, and adjusted depending on the number of files in the search space 110, as well as the number of files matched for any given search term.

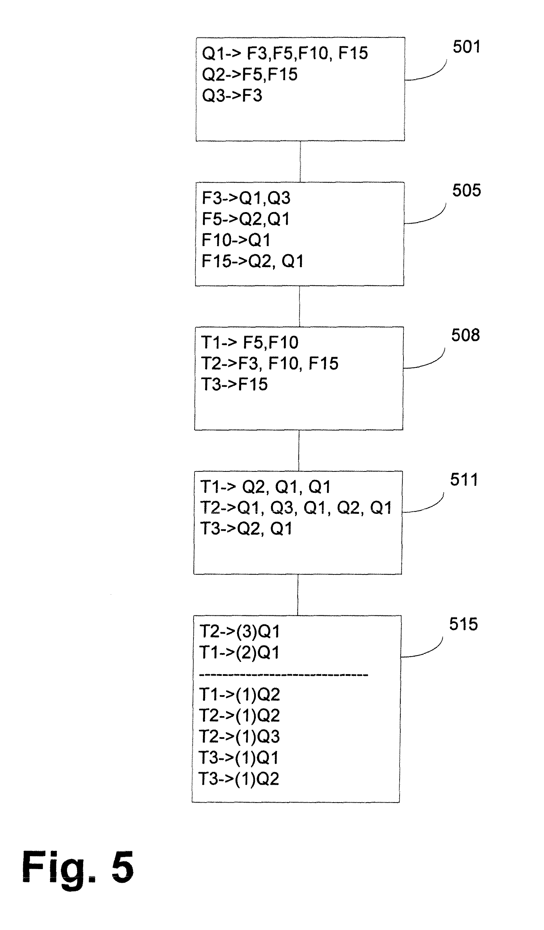

For example, query 101 may appear in a particular file only one time, while it may appear in another file one hundred times. Intuitively, query 101 is more likely to be related to the file where it appears one hundred times than the file that it appears in only once. An embodiment can exploit this by only considering files that contain the query 101 greater than some user determined frequency or number of times. While this example discusses ranking search results based on the frequency of the search term appearing in a particular file, any other methods for ranking search results may be used. In addition, this ranking can be further used to rank proposed query to task mappings, as further discussed with respect to Figure 5.

As illustrated in Figure 2, task 202 is desirably mapped on to several files in search space 110, as represented at 230. To determine the mapping, each file in search space 110 is desirably text searched for task 202. Any file that results in a match is presumably related to task 202, and can provide further information regarding the meaning of task 202. This information can then be used to generate a candidate mapping. The candidate mappings can be ranked in a similar way as described with respect to the query to file mappings of Figure 1.

Figure 3 illustrates the overlap between the files in search space 110 matching query 101 and the files in search space 110 matching task 202. The overlapping files between 120 and 230 is shown in Figure 3 at 350. This overlap set is populated by files from search space 110 that contain both query 101 and task 202 somewhere in the text of the files. The larger this area of overlap, the more files that contain both query 101 and task 202, and the more likely that there is a relationship or connection between query 101 and task 202. In addition, other factors may indicate a high probability of a relationship or connection between query 101 and task 102, for example, high weights or rankings associated with the underlying query to file mapping and task to file mapping may indicate a high probability of a relationship even where few files were actually mapped.

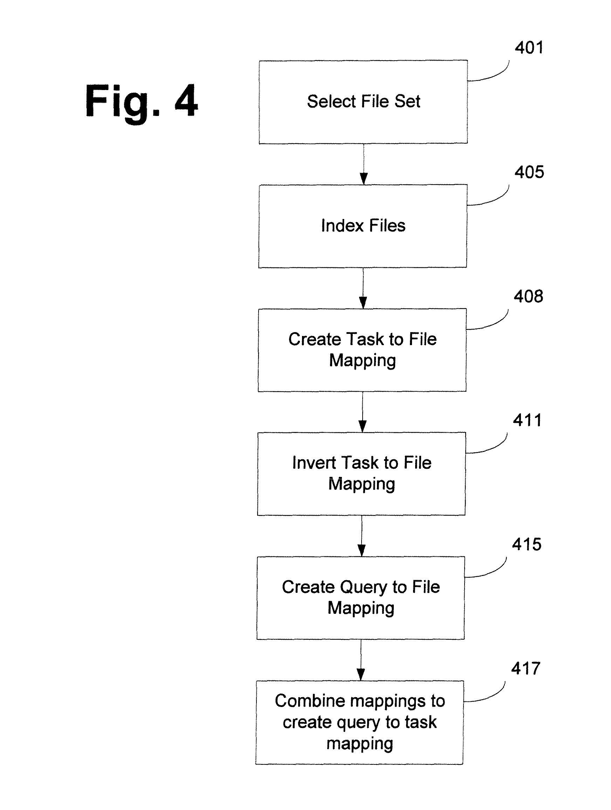

The relationship between the size of overlap 350 and the probability of a relationship existing between query 101 and task 202 can be used to rank or assign weights to a proposed mapping. As described further with respect to Figures 4 and 5, multiple query 101 terms and task 202 terms are desirably compared in a manner similar to those described above. Some query 101 and task 202 terms will match a greater number of files than other query 101 and task 202 terms. Intuitively, this indicates that the terms are more likely to be related. Similarly, some query 101 and task 202 terms that match a particular file will receive a higher weight or ranking for the matched file. A query 101 term and task 202 term that match the same file, each with a high ranking, also indicates that the terms are likely to be related.

As discussed above, human reviewers can be used to verify matches. These human reviewers are expensive and time consuming. Thus, it is desirable to minimize the time spent by humans in reviewing proposed matches. To this end, proposed matches can be ranked, and those matches that fall below a certain desirably user determined threshold can be eliminated. Thus, the match(es) will not be sent to human annotators to verify the match. The user determined threshold can be determined by an administrator depending on factors such as the number of proposed matches, and the number of files in the search space 110. An exemplary method is described in more detail with respect to Figure 5.

Figure 4 is a flow chart of an exemplary method for generating a query to task mapping in accordance with the present invention. A mapping between queries and tasks is generated by mapping both the queries and the tasks to a selection of files or text documents and combining the results. A set of sample files is selected and an index is generated on the files. A set of queries is searched on the generated index, and a weighted list is generated of the files from the sample set of files that match each of the queries comprising the set of queries. A set of tasks is searched on the generated index, and a weighted list is generated of the files from the sample set of files that match each of the tasks comprising the set of tasks.

The ranked list of files from the sample set of files that match each of the tasks is inverted to give a list of each file and the weighed lists of tasks matching that file. The list of queries and the matching files can be combined with the list of files and matching tasks to generate a weighted list of queries and matching tasks. While the exemplary embodiment is discussed with reference to tasks and queries, the method is applicable for creating a mapping between any sets of short strings.

More particularly, at 401, the file set is created. As previously discussed with respect to Figure 1, the file set is desirably related to the general domain of the tasks and queries that are the subject of the mapping. In addition, a sufficiently large set of files should be selected. If too many files are selected there may not be enough matches between the tasks and files, and the queries and files, to create a meaningful mapping between the queries and tasks. However, if too few files are chosen for the file set, there is a risk of generating too many coincidental matches (which could, e.g., create extra work for the annotators). In general, this risk is small given that any coincidental matches would desirably have a very small weight associated with them and can therefore be eliminated (e.g., before any subsequent annotation process).

At 405, an index is desirably created using the selected files. Indexing a set of files allows for the files to be quickly searched. An index entry for a file could comprise a list of every word contained in that file. A more sophisticated index might comprise the number of occurrences of each word in a file, allowing a match to be given a rank or likelihood that the match is meaningful. The more times a matched word appears in a file, the higher the likelihood that the file is related to the matched word. Similarly, a given file index can be improved through the use of text normalization, including the use of spelling, morphological analysis, punctuation, phrases etc. For example, common misspellings of words found in the files can be included in the index. In one embodiment, a standard operating system indexing service may be used to create the file index, but any system, method, or technique known in the art for creating an index on a group of files can be used.

At 408, each of the tasks is searched on the index of the files. A list containing the files that matched each of the tasks is desirably generated. Given the type of indexing used, the list of files matching each task can be ranked or given a confidence level indicating the quality of the match or the likelihood that it is accurate. The list of files can then be reduced by eliminating the matches below a (e.g., user determined) rank or confidence level. It is contemplated that any system, method, or technique known in the art for file searching can be used.

At 411, a new list, comprising an entry for each file in the file set and the associated tasks matching the file entry, is desirably generated from the list comprising an entry for each task and the files that contained that task. The list is desirably generated by inverting or reversing the list comprising an entry for each task and the files that contained that task. The new list comprises an entry for each file in the file set and the associated tasks matching the file entry. Any rankings or confidence level associated with each match is desirably preserved in the new list.

At 415, each of the queries is searched on the same index of the files as the tasks. A list containing the files that matched each of the queries is desirably generated. A rank or confidence level is desirably specified for each match. Similar to the task reduction set forth above, given the type of indexing used, the list of files matching each query can be reduced by eliminating the matches below a user determined rank or confidence level. Any system, method, or technique known in the art for file searching can be used.

At 417, the generated list containing the query to files mapping is desirably combined with the list containing the files to task mapping, creating the query to task mapping. In addition, as described further below with respect to Figure 5, each proposed query to task mapping can be ranked or weighted based on the number of times that the query and task pair were matched in a file, or based on a function of the task to file and query to file mapping weights returned by the search system used. After the candidate mappings are generated, they can be submitted to human reviewers (or other automated systems) where coincidental or false mappings can then be removed.

Figure 5 is an illustration useful in describing an exemplary method for assigning weights to a generated mapping in accordance with the present invention. In an exemplary embodiment, a mapping of query terms to text files is created by searching for the query terms in a set of text files. A mapping of task terms to text files is generated in a similar manner. The mapping of queries to files is inverted or reversed, creating a mapping of files to query terms. The mapping of tasks to files is combined with the mapping of files to queries, creating a mapping of tasks to queries. The number of times a particular task is mapped to a particular query can be used to rank the results. Similarly, the rankings or confidence levels of the underlying query to file and task to file mappings can be used to generate an overall ranking or confidence level for the query to task mapping. A threshold can then be determined to eliminate matches below a certain rank, thus ensuring the generated matches are accurate. While the exemplary embodiment is discussed in terms of queries and tasks, it is equally applicable to generating mappings between a set or sets of short strings with another set or sets of short strings.

At 501, the mapping from the queries to the files is generated. Assume for the purposes of this example that there are three query terms 1-3, and fifteen text files 1-15. As shown, query 1 maps to files 3, 5, 10, and 15; query 2 maps to files 5 and 15; and query 3 maps to file 3. In this example, a particular query is found to map to a file when the query term appears at least once in the file.

As discussed with respect to Figure 4, a particular mapping can be assigned a confidence or weight. There are many techniques known in art for assigning a weight or confidence to a search result, including inverse document frequency, how rare or common the search term is, and, as used in this example, term frequency. Using term frequency, a particular match is ranked depending on the number of times the query is found in the file. Matches can be eliminated or ignored if they are below a certain rank. For example, if a particular file set and search term yielded a large number of matches, the system or a user could eliminate any match lower than a certain rank to increase the likelihood that the matched files related to the searched term. This method of assigning confidences to the matches can be used along with a method for ranking proposed relationships between tasks and queries.

At 505, the mapping from the queries to the files is desirably inverted or reversed, providing a mapping from the files to the queries. As shown, file 3 maps to queries 1 and 3; file 5 maps to queries 2 and 1; file 10 maps to query 1; and file 15 maps to queries 2 and 1. Files 1, 2, 4, 6, 7, 8, 9, 11, 12, 13, and 14 are omitted because they did not match with any of the queries.

At 508, the mapping from the tasks to the files is generated. Assume for the purposes of this example that there are three task terms 1-3, and fifteen text files 1-15. As shown, task 1 maps to files 5 and 10; task 2 maps to files 3, 10, and 15; and task 3 maps to file 15.

At 511, the mapping from the tasks to the files is combined with the mapping from the files to the queries, creating a mapping from the tasks to queries. Each file can map to several different queries, and several different tasks. As a result, when the two mappings are combined, some tasks are shown to map to the same query multiple times. Rather than being redundant, the number of times a task matches with a particular query can provide insight as how good of a match it is. As shown, task 1 maps to query 2 once and query 1 twice; task 2 maps to query 1 thrice, query 2 once and query 3 once; and task 3 maps to query 2 once and query 1 once.

At 515, a ranking or a confidence level for each mapping is generated. As shown, each task to query mapping is ranked by the number of duplicate matches found. Each duplicate mapping represents a file that contained both the query term and the task term. The greater the rank, the greater the chance that the mapping between the tasks and queries is meaningful.

In addition to ranking by the number of duplicate matches, the ranking or confidence level for each mapping can be generated using any system, method, or technique known in the art for assigning weights or confidence levels to searched terms. For example, if the weights returned by the search system (the degree of match) is used, then it may happen that in some cases, there may be single large weight overlap, which is more significant than a duplicate being found.

In order to save time and money spent on human review of the generated mappings, a user can filter the generated mappings based on some threshold. The reviewers examine each generated mapping in order to determine if a real relationship between the query and task exists, or if the match was just a coincidence or the result of a poor text file in the set of files. Because the review is an expensive process, done by those skilled in the art, it is desirable to minimize the number of mappings that are reviewed. To this end, the user desirably determines the minimum ranking that can be found between a task and a query before the mapping will be considered by the reviewers. In the example described with respect to Figure 5, it was determined that the number of duplicate matches should be at least two. As shown above the dotted line in 515, only the mappings between task 2 and query 1, and task 1 and query 1 met this criteria. In practice, the optimal ranking desired for a match will depend greatly on the size of the search space that the queries and tasks are mapped to, as well as the relatedness of the files.

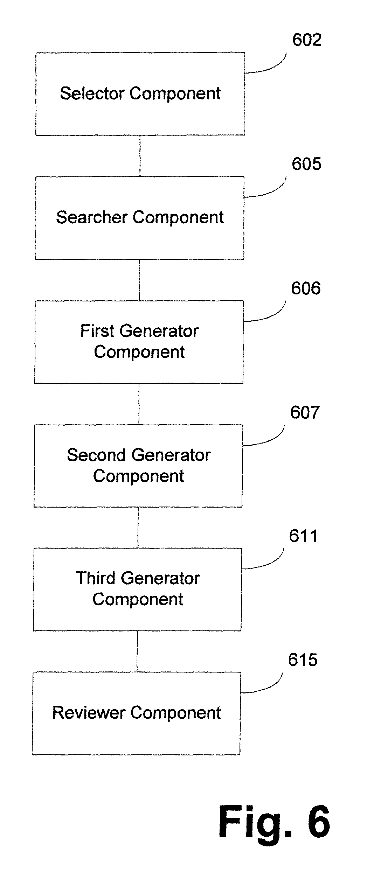

Figure 6 is a block diagram illustrating components of an exemplary system in accordance with the present invention. The system comprises a selector component 602; a searcher component 605; a first generator component 606; a second generator component 607; a third generator component 611; and a reviewer component 615.

The selector component 602 is desirably used to select a set of files that can be used to create a mapping between a set of short query strings and a set of short task strings. Because the queries and tasks are short strings, there is little information through which a mapping can be generated. As described with respect to Figure 1, a set of files is desirably selected that is related to the domain of the query and task strings. The queries and tasks are then desirably mapped to the set of files. Queries and tasks that map to the same file are presumed to be related, and therefore map together. In this manner, a mapping between the queries and task is generated. To this end, it is desirable that the set of files selected by the selector component 602 be related to the general domain of the queries and tasks, and be of a sufficient size so that there are enough files to create the mapping, and not every query maps to every task. The selector component 602 can be implemented using hardware, software, or a combination of both. While the embodiment is discussed in terms of sets of queries and tasks, it is applicable to creating a mapping between any sets of short strings.

The searcher component 605 is desirably used to search the selected text files for occurrences of the strings from the set of queries and the set of tasks. Each query and task is desirably text searched in the set of files. As discussed further with respect to Figures 1-3, the selected files are text searched for occurrences of each query and task. In addition, the searcher component 605 desirably assigns a weight or confidence level to any matches found indicating how related that particular file is to the searched term. Any system, method, or technique known in the art for searching a set of text files for a string and assigning weights or confidence levels to the results may be used. The searcher component 605 can be implemented using hardware, software, or a combination of both.

The first generator component 606 is desirably used to generate the mapping between the queries and the set of files. The generated mapping can comprise a list containing an entry for each query term, along with each file from the set of files that contains that query term. The generated mapping can be further refined by the first generator component 606, for a given term, by only adding files that achieved a certain rank or confidence level. For example, a given file that is found to match a particular query term by the searcher component 605 may have received a low weight, while another file that matches the query term may have received a very high weight. By definition, the file with the high weight is more likely to be related to the query term than the file with the low weight. The first generator component 606 can add entries to the list where the file matches the query term with a weight or confidence level above a user specified amount. The first generator 606 can be implemented in hardware, software, or a combination of both.

The second generator component 607 is desirably used to generate the mapping between the tasks and the selected files. The generated mapping can comprise a list containing an entry for each task term, along with each file from the set of files, that contains that task term. The generated mapping can be further refined by the second generator component 607, for a given term, by only adding files that contained the task term having a weight or confidence level above a certain user specified amount. This is described in greater detail with respect to the first generator component 606. The second generator component 607 can be implemented using hardware, software, or a combination of both.

The third generator component 611 is desirably used to generate the mapping between the set of short queries and the set of short tasks. The mapping is desirably generated by combining the mapping from the query terms to the file set with the mapping from the task terms to the file set. Each individual mapping between a query and a task corresponds with at least one file in the file set that contained both the query and the task term. Some query and task terms were matched or contained together in multiple files from the file set. The third generator component 611 can further refine the mapping by eliminating those query and task mappings that appeared together in less than some determined threshold. The threshold can be determined with reference to the total number of proposed mappings, or the size of the initial file set.

Similarly, the mapping between the query and task terms can be refined by creating a ranking or confidence level for each mapping based on underlying ranking or confidence level associated with the query to file mapping and the task to file mapping. Each matched query and task term has an associated weight or confidence level for both the underlying query to file mapping and the task to file mapping, as generated by the searcher component 605. A composite ranking can be generated for the query to task mapping by combining the two rankings. The third generator component 611 can eliminate those query and task mappings that receive a ranking below some determined threshold. The third generator component 611 can be implemented in hardware, software, or a combination of both.

The reviewer component 615 desirably determines which of the generated mappings between queries and tasks are meaningful, and desirably eliminates the mappings that are not meaningful. Human annotators acting as reviewers, desirably skilled with respect to the relevant subject of the query and task terms, can examine each mapping and eliminate a mapping if the query and task term do not appear to be related. This review can also be automated or computerized. In such cases, this reviewer component 615 can be implemented in hardware, software, or a combination of both.

### Exemplary Computing Environment

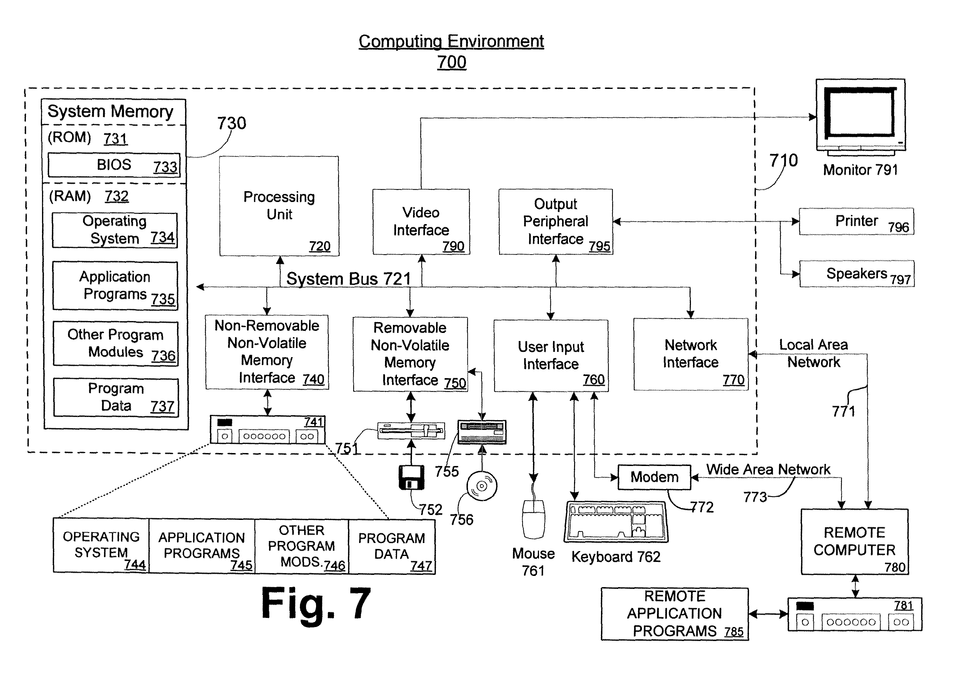

Figure 7 illustrates an example of a suitable computing system environment 700 in which the invention may be implemented. The computing system environment 700 is only one example of a suitable computing environment and is not intended to suggest any limitation as to the scope of use or functionality of the invention. Neither should the computing environment 700 be interpreted as having any dependency or requirement relating to any one or combination of components illustrated in the exemplary operating environment 700.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network or other data transmission medium. In a distributed computing environment, program modules and other data may be located in both local and remote computer storage media including memory storage devices.

With reference to Figure 7, an exemplary system for implementing the invention includes a general purpose computing device in the form of a computer 710. Components of computer 710 may include, but are not limited to, a processing unit 720, a system memory 730, and a system bus 721 that couples various system components including the system memory to the processing unit 720. The system bus 721 may be any of several types of bus structures including a memory bus or memory controller, a peripheral bus, and a local bus using any of a variety of bus architectures.

Computer 710 typically includes a variety of computer readable media. Computer readable media can be any available media that can be accessed by computer 710 and includes both volatile and non-volatile media, removable and non-removable media. By way of example, and not limitation, computer readable media may comprise computer storage media and communication media. Computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 710. Communication media typically embodies computer readable instructions, data structures, program modules or other data in a modulated data signal such as a carrier wave or other transport mechanism and includes any information delivery media. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 730 includes computer storage media in the form of volatile and/or non-volatile memory such as ROM 731 and RAM 732. A basic input/output system 733 (BIOS), containing the basic routines that help to transfer information between elements within computer 710, such as during start-up, is typically stored in ROM 731. RAM 732 typically contains data and/or program modules that are immediately accessible to and/or presently being operated on by processing unit 720. By way of example, and not limitation, Figure 7 illustrates operating system 734, application programs 735, other program modules 736, and program data 737.

The computer 710 may also include other removable/non-removable, volatile/non-volatile computer storage media. By way of example only, Figure 7 illustrates a hard disk drive 740 that reads from or writes to non-removable, non-volatile magnetic media, a magnetic disk drive 751 that reads from or writes to a removable, non-volatile magnetic disk 752, and an optical disk drive 755 that reads from or writes to a removable, non-volatile optical disk 756, such as a CD-ROM or other optical media. Other removable/non-removable, volatile/non-volatile computer storage media that can be used in the exemplary operating environment include, but are not limited to, magnetic tape cassettes, flash memory cards, digital versatile disks, digital video tape, solid state RAM, solid state ROM, and the like. The hard disk drive 741 is typically connected to the system bus 721 through a non-removable memory interface such as interface 740, and magnetic disk drive 751 and optical disk drive 755 are typically connected to the system bus 721 by a removable memory interface, such as interface 750.

The drives and their associated computer storage media provide storage of computer readable instructions, data structures, program modules and other data for the computer 710. In Figure 7, for example, hard disk drive 741 is illustrated as storing operating system 744, application programs 745, other program modules 746, and program data 747. Note that these components can either be the same as or different from operating system 734, application programs 735, other program modules 736, and program data 737. Operating system 744, application programs 745, other program modules 746, and program data 747 are given different numbers here to illustrate that, at a minimum, they are different copies. A user may enter commands and information into the computer 710 through input devices such as a keyboard 762 and pointing device 761, commonly referred to as a mouse, trackball or touch pad. These and other input devices are often connected to the processing unit 720 through a user input interface 760 that is coupled to the system bus, but may be connected by other interface and bus structures. A monitor 791 or other type of display device is also connected to the system bus 721 via an interface, such as a video interface 790. In addition to the monitor, computers may also include other peripheral output devices such as speakers 797 and printer 796, which may be connected through an output peripheral interface 795.

The computer 710 may operate in a networked environment using logical connections to one or more remote computers, such as a remote computer 780. The remote computer 780 may be a personal computer, a server, a router, a network PC, a peer device or other common network node, and typically includes many or all of the elements described above relative to the computer 710, although only a memory storage device 781 has been illustrated in Figure 7. The logical connections depicted include a LAN 771 and a WAN 773, but may also include other networks.

When used in a LAN networking environment, the computer 710 is connected to the LAN 771 through a network interface or adapter 770. When used in a WAN networking environment, the computer 710 typically includes a modem 772 or other means for establishing communications over the WAN 773, such as the internet. The modem 772, which may be internal or external, may be connected to the system bus 721 via the user input interface 760, or other appropriate mechanism. In a networked environment, program modules depicted relative to the computer 710, or portions thereof, may be stored in the remote memory storage device. By way of example, and not limitation, Figure 7 illustrates remote application programs 785 as residing on memory device 781. It will be appreciated that the network connections shown are exemplary and other means of establishing a communications link between the computers may be used.

As mentioned above, while exemplary embodiments af the present invention have been described in connection with various computing devices, the underlying concepts may be applied to any computing device or system.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. The program(s) can be implemented in assembly or machine language, if desired. In any case, the language may be a compiled or interpreted language, and combined with hardware implementations.

The methods and apparatus of the present invention may also be practiced via communications embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, or the like, the machine becomes an apparatus for practicing the invention. When implemented on a general-purpose processor, the program code combines with the processor to provide a unique apparatus that operates to invoke the functionality of the present invention. Additionally, any storage techniques used in connection with the present invention may invariably be a combination of hardware and software.

While the present invention has been described in connection with the preferred embodiments of the various figures, it is to be understood that other similar embodiments may be used or modifications and additions may be made to the described embodiments for performing the same function of the present invention without deviating therefrom. Therefore, the present invention should not be limited to any single embodiment, but rather should be construed in breadth and scope in accordance with the appended claims.

## Claims

1. A method for determining relationships between a first set of strings and a second set of strings, comprising:
selecting a set of files;
creating an index from the set of files;
searching the index for files that are related to the first set of strings;
creating a first list comprising an entry for each string from the first set of strings and the files from the set of files that are related to that string;
searching the index for files that are related to the second set of strings;
creating a second list comprising an entry for each string from the second set of strings and the files from the set of files that are related to that string;
generating, from the first list, a third list comprising an entry for each file from the set of files and the strings from the first set of strings that are related to that file; and
generating, from the second list and the third list, a fourth list comprising an entry for each string from the second set of strings and the strings from the first set of strings, if any, that related to the same file from the set of files as the string from the second set of strings.

2. The method of claim 1, further comprising:
determining if an entry in the fourth list represents a valid relationship between a string from the second set of strings and a string from the first set of strings; and
removing any entry from the fourth list that does not represent a valid relationship between a string from the second set of strings and a string from the first set of strings.

3. The method of claim 1, further comprising generating a ranking for each entry in the first list and the second list, and generating a ranking for each entry in the fourth list using the generated rankings from the first list and the second list.

4. The method of claim 3, further comprising determining a minimum rank, and removing any entry from the fourth list that has a rank below the minimum rank.

5. The method of claim 4, further comprising:
determining if an entry in the fourth list represents a valid relationship between a string from the second set of string and a string from the first set of strings; and
removing any entry from the fourth list that does not represent a valid relationship between a string from the second set of string and string from the first set of strings.

6. The method of claim 1, wherein selecting a set of files comprises selecting a set of files in the same domain as the first set of strings and the second set of strings.

7. A system for determining relationships between a first set of strings and a second set of strings, comprising:
a selector component that selects a set of files that are stored in a storage device;
a searcher component that searches for strings from the first set of strings and the second set of strings in the set of files;
a first generator component that generates a first list comprising at least one pair, the pair comprising a string from the first set of strings and a file from the file set that is related to said string;
a second generator component that generates a second list comprising at least one pair, the pair comprising a string from the second set of strings and a file from the file set that is related to said string; and
a third generator component that generates a third list, using the first list and the second list, comprising at least one pair, the pair comprising a string from the first set of strings and a string from the second set of strings, wherein the string from the first set of strings and the string from the second set of strings are mutually related to at least one file from the file set.

8. The system of claim 7, further comprising a reviewer component that verifies pairs in the third list, and removes pairs from the third list that cannot be verified.

9. The system of claim 7, wherein the first list further comprises, for each pair in the first list, a confidence indicator.

10. The system of claim 9, wherein the searcher component determines the confidence indicator for the pair based on the probability that the string from the first set of strings is related to the file from the set of files.

11. The system of claim 10, wherein the first generator component removes a pair from the first list if the confidence indicator is less than a predetermined amount.

12. The system of claim 10, wherein the first generator component removes a pair from the list if the confidence indicator is below the average confidence indicator for the first list.

13. The system of claim 7, wherein the second list further comprises, for each pair in the second list, a confidence indicator.

14. The system of claim 13, wherein the searcher component determines the confidence indicator for the pair based on the probability that the string from the second set of strings is related to the file from the set of files.

15. The system of claim 13, wherein the second generator component removes a pair from the second list if the confidence indicator is less than a predetermined amount.

16. The system of claim 13, wherein the second generator component removes a pair from the second list if the confidence indicator is below the average confidence indicator for the second list.

17. The system of claim 7, wherein the selector component selects a set of files that is in the same domain as the first set of strings and the second set of strings.

18. A method for creating a mapping between a first set of strings and a second set of strings, comprising:
maintaining an index of files;
creating a first mapping between the first set of strings and the index of files;
creating a second mapping between the second set of strings and the index of files; and
creating the mapping between the first set of strings and the second set of strings based on the first mapping and the second mapping.

19. The method of claim 18, wherein maintaining the index of files comprises selecting an index of files that is in the same domain of the first set of strings and the second set of strings.

20. The method of claim 18, wherein creating the first mapping comprises:
searching the index of files for files that are related to at least one of the strings from the first set of strings; and
for each string in the first set of strings that is related to a file from the index of files, making an entry in a first list, the entry comprising the string from the first set of strings, and each file from the index of files that is related to the string from the first set of strings.

21. The method of claim 20, wherein creating the second mapping comprises:
searching the index of files for files that are related to at least one of the strings from the second set of strings; and
for each string in the second set of strings that is related to a file from the index of files, making an entry in a second list, the entry comprising the string from the second set of strings, and each file from the index of files that is related to the string from the second set of strings.

22. The method of claim 21, wherein creating the mapping between the first set of strings and the second set of strings comprises:
generating a third list from the second list, wherein the third list comprises an entry for each file from the index of files that is related to a string from the second set of strings, along with each string from the second set of strings that is related to the file;
generating a fourth list from the third list and the first list, wherein the fourth list comprises an entry for each string from the first set of strings that is related to a file from the index of files, and each string from the second set of strings that is related to the same file as the string from the first set of strings.

23. The method of claim 22, further comprising generating a ranking for each entry in the fourth list.

24. A system for creating a mapping between a first set of strings and a second set of strings, comprising:
a storage device for maintaining an index of files; and
a processor for creating a first mapping between the first set of strings and the index of files; creating a second mapping between the second set of strings and the index of files; and creating the mapping between the first set of strings and the second set of strings based on the first mapping and the second mapping.

25. The system of claim 24, further comprising an input device for receiving the first set of strings and the second set of strings.

26. The system of claim 24, wherein the processor creates the first mapping by:
searching the index of files for files that are related to at least one of the strings from the first set of strings; and
for each string in the first set of strings that is related to a file from the index of files, making an entry in a first list, the entry comprising the string from the first set of strings, and each file from the index of files that is related to the string from the first set of strings.

27. The system of claim 26, wherein the processor creates the second mapping by:
searching the index of files for files that are related to at least one of the strings from the second set of strings; and
for each string in the second set of strings that is related to a file from the index of files, making an entry in a second list, the entry comprising the string from the second set of strings, and each file from the index of files that is related to the string from the second set of strings.

28. The system of claim 27, wherein the processor creates the mapping between the first set of strings and the second set of strings by:
generating a third list from the second list, wherein the third list comprises an entry for each file from the index of files that contained a string from the second set of strings, along with each string from the second set of strings that is related to the file; and
generating a fourth list from the third list and the first list, wherein the fourth list comprises an entry for each string from the first set of strings that is related to a file from the index of files, and each string from the second set of strings that is related to the same file as the string from the first set of strings.

29. The system of claim 28, further comprising generating, by the processor, a ranking for each entry in the fourth list.

30. A method for determining relationships between a first set of strings and a second set of strings, comprising:
receiving a generated mapping between a first set of strings and a second set of strings, the mapping comprising a plurality of entries, each entry comprising a string from the first set of strings and a string from the second set of strings;
determining if an entry represents a valid relationship between the string from the first set of strings and the string from the second set of strings; and
removing an entry that does not represent a valid relationship.

31. The method of claim 30, further comprising:
selecting a set of files;
generating an index from the set of files;
generating a first mapping from the first set of strings to the set of files;
generating a second mapping from the second set of strings to the set of files;
generating a third mapping from the first set of strings to the second set of strings, using the first mapping and the second mapping; and
sending the third mapping to a reviewer.
